# EUROPÄISCHE PATENTSCHRIFT

(11) **EP 3 009 794 B1**
(45) Veröffentlichungstag und Bekanntmachung des Hinweises auf die Patenterteilung: **12.04.2017**
(21) Anmeldenummer: 15002625.0
(22) Anmeldetag: 08.09.2015
(51) Int. Cl.: G01S 19/13, G01S 13/02, G01C 21/00, G05D 1/06, G08G 5/02

(54) **REDUNDANTES BESTIMMEN VON POSITIONSDATEN FÜR EIN AUTOMATISCHES LANDESYSTEM**
REDUNDANT DETERMINING OF POSITIONAL INFORMATION FOR AN AUTOMATIC LANDING SYSTEM
DETERMINATION REDONDANTE DE DONNEES DE POSITION POUR UN SYSTEME D'ATTERRISSAGE AUTOMATIQUE

(30) Priorität: 26.09.2014 DE 102014014446
(43) Veröffentlichungstag der Anmeldung: 20.04.2016
(73) Patentinhaber: Airbus Defence and Space GmbH, 81663 Ottobrunn (DE)
(72) Erfinder: Hanel, Martin, 85053 Ingolstadt (DE); Stahl, Christoph, 85123 Karlskron (DE); Lohmiller, Winfried, 85354 Freising (DE)

(56) Entgegenhaltungen:
- US-A1- 2008 077 284
- US-B1- 6 178 363

## Beschreibung

Die Erfindung betrifft das redundante Bestimmen von Positionsdaten für automatische Landesysteme von Luftfahrzeugen. Insbesondere betrifft die Erfindung ein automatisches Landesystem für ein Luftfahrzeug, eine Drohne mit einem automatischen Landesystem und ein Verfahren zum Bestimmen von Positionsdaten eines Luftfahrzeuges für ein automatisches Landesystem.

### Technischer Hintergrund

Bemannte und unbemannte Flugzeuge können heutzutage mit automatischen oder teilautomatischen Landesystemen ausgestattet sein. Zum Steuern des Landeanfluges können automatische Landesysteme die Entfernung des Flugzeuges vom angestrebten Landepunkt bestimmen, beispielsweise aus einer Positions- oder Entfernungsmessung. Mit Hilfe der Entfernungsparameter und weiterer Messgrößen wie beispielsweise der Fluggeschwindigkeit können Flugreglerkommandos derart erzeugt werden und der Autopilot derart gesteuert werden, dass das Flugzeug am Landepunkt aufsetzt.

Automatische Landesysteme für bemannte Flugzeuge sind üblicherweise mit Entfernungsmessern mit hoher Integrität und Genauigkeit ausgestattet. Falls das Landesystem nicht zur Verfügung steht oder fehlerhaft ist, kann der Pilot eine manuelle Landung auf demselben oder einem Ausweichflugplatz (Alternate) durchführen. Bei unbemannten Flugzeugen kann die Landung im Falle eines Fehlers im automatischen Landesystem über manuelle bzw. direkte Steuerkommandos erfolgen, die per Datenlink an das Flugzeug übermittelt werden.

Derartige Systeme sind beispielsweise aus der US 2008/077284 A1 oder der US 6,178,363 B1 bekannt.

### Zusammenfassung der Erfindung

Es ist eine Aufgabe der Erfindung, das automatische Landen von Luftfahrzeugen zu verbessern.

Die Aufgabe wird durch die Gegenstände der unabhängigen Ansprüche gelöst. Weiterbildungen und Ausführungsformen sind den abhängigen Ansprüchen, der nachfolgenden Beschreibung und den Figuren zu entnehmen.

Die Erfindung betrifft gemäß einer beispielhaften Ausführungsform ein automatisches Landesystem für ein Luftfahrzeug. Das automatische Landesystem beinhaltet eine Steuereinrichtung zum Bereitstellen von Positionsdaten zum Steuern des Luftfahrzeugs, eine erste Positions- oder Entfernungsmesseinrichtung zum Erfassen erster Positionsdaten des Luftfahrzeuges, eine zweite Positions- oder Entfernungsmesseinrichtung zum Erfassen zweiter Positionsdaten des Luftfahrzeuges und eine Sensoreinrichtung zum Erfassen von Sensordaten, aus welchen eine Richtung, in der sich eine Landmarke befindet, und/oder eine Entfernung der Landmarke zum Luftfahrzeug bestimmt werden kann bzw. können. Die Steuereinrichtung ist dazu ausgeführt, basierend auf den ersten Positionsdaten eine erste Hypothese für die Richtung bzw. Entfernung der Landmarke und basierend auf den zweiten Positionsdaten eine zweite Hypothese für die Richtung bzw. Entfernung der Landmarke zu erzeugen. Weiterhin ist die Steuereinrichtung dazu ausgeführt, die erste Hypothese und die zweite Hypothese jeweils mit den von der Sensoreinrichtung erfassten Sensordaten zu bestätigen oder zu verwerfen. Die Steuereinrichtung ist außerdem dazu ausgeführt, zu entscheiden, dass nur diejenigen Positionsdaten zum Steuern des Luftfahrzeugs zu verwenden sind, auf denen eine bestätigte Hypothese basiert.

Im Kontext der Erfindung kann unter einem Luftfahrzeug ein bemanntes oder unbemanntes Luftfahrzeug verstanden werden. Beispielsweise kann das Luftfahrzeug ein Luftschiff, ein Drehflügler, ein Flugzeug oder eine Drohne sein. Das automatische Landesystem kann ein System zum automatischen Steuern eines Landeanfluges des Luftfahrzeuges, welches keinen menschlichen Eingriff erfordert, bezeichnen.

Die Steuereinrichtung (Steuer- und Entscheidungseinheit E) kann zur redundanten Positions- oder Entfernungsbestimmung des Luftfahrzeuges ausgeführt sein. Mit anderen Worten kann die Steuereinrichtung dazu ausgeführt sein, Positionsdaten aus zumindest zwei unabhängigen Positionsdaten auszuwählen und die ausgewählten Positionsdaten zum Steuern des Luftfahrzeuges zu verwenden bzw. an ein Flugsteuerungssystem zu übertragen.

Die erste Positions- oder Entfernungsmesseinrichtung (Positions- oder Entfernungsmesser S) und die zweite Positions- oder Entfernungsmesseinrichtung (Positions- oder Entfernungsmesser B) können jeweils dazu ausgeführt sein, eine Position des Luftfahrzeuges zu bestimmen. Die bestimmten Positionsdaten können die dreidimensionale Position des Luftfahrzeuges enthalten, z.B. die räumlichen Koordinaten des Luftfahrzeuges bzw. eine Distanz, einen Azimutalwinkel und einen Elevationswinkel bezüglich eines Landeplatzes. Beispielsweise können die ersten und/oder zweiten Positionsdaten eine absolute Position des Luftfahrzeuges oder eine relative Position des Luftfahrzeuges zu einem Landeplatz definieren. Beispielsweise können die Positionsdaten bzw. die absolute Position in den Koordinaten des World Geodetic System 1984 (WGS84) definiert sein bzw. in diese umgerechnet werden.

Die Sensoreinrichtung (Sensor O) kann dazu ausgeführt sein, Sensordaten zu erfassen, die Rückschlüsse über eine Richtung oder eine Entfernung einer Landmarke zulassen. Unter einer Landmarke kann im Kontext der Erfindung auch ein charakteristischer Ort verstanden werden, dessen absolute Position oder dessen Eigenschaften relativ zum angestrebten Landepunkt der Steuereinrichtung bekannt sein kann. Beispielsweise kann es sich bei der Landmarke um ein geographisches Objekt handeln, das mittels Bildverarbeitung oder Signalverarbeitung erkennbar ist. Beispielsweise kann die Landmarke eine Landebahn oder ein Flugverkehrskontrollturm sein, die sich von der Umgebung derart abgrenzen, dass sie beispielsweise mittels Bilderkennung aus einem Bild einer Kamera erkennbar sind. Die Landmarke kann auch eine Signalquelle, beispielsweise eine Licht-, Funk- oder Radarquelle, sein, die mittels einer Kamera, eines Funk- oder Radarempfängers des Luftfahrzeuges erkennbar ist.

Die erste Positions- oder Entfernungsmesseinrichtung, die zweite Positions- oder Entfernungsmesseinrichtung und die Sensoreinrichtung können voneinander unabhängig sein. Das heißt, dass jede dieser Einrichtungen die zugehörigen Daten unabhängig von den anderen Einrichtungen bestimmen kann. Außerdem können die erste und zweite Positions- oder Entfernungsmesseinrichtung und die Sensoreinrichtung mit der Steuereinrichtung funktional verbunden sein.

Die erste und zweite Hypothese können jeweils basierend auf der absoluten Position der Landmarke erzeugt werden. Dazu kann der Steuereinrichtung die absolute Position der Landmarke bekannt sein. Beispielsweise kann die Steuereinrichtung auf digitale Kartendaten zugreifen, in denen die absoluten Positionen von Landmarken abgespeichert sind.

Mittels der Positionsdaten kann eine Richtung bzw. eine Entfernung der Landmarke bestimmt werden. Mit der bestimmten Richtung bzw. Entfernung können dann die erste Hypothese für die Richtung bzw. Entfernung der Landmarke bestätigt oder verworfen werden. Dabei kann unter dem Bestätigen bzw. Verwerfen der Hypothesen unterschiedliche Verfahren verstanden werden, mittels welchen eine Hypothese aus den zwei Hypothesen ausgewählt wird. Beispielsweise kann jeweils eine Korrelation zwischen der ersten bzw. zweiten Hypothese und den Sensordaten bestimmt werden. Es ist ferner auch möglich, dass beide Hypothesen bestätigt werden (z.B. wenn die ersten Positionsdaten und die zweiten Positionsdaten wenig voneinander abweichen) oder beide Hypothesen verworfen werden (z.B. wenn beide Hypothesen nicht mit den Sensordaten übereinstimmen). Zum Steuern des Luftfahrzeuges können anschließend die bestätigten Positionsdaten an eine Flugsteuerungseinheit (Flugsteuerungssystem) übertragen werden.

Mittels dem Bestätigen bzw. Verwerfen der Hypothesen kann beispielsweise zumindest ein Positionsparameter der ersten oder zweiten Positionsdaten bestätigt oder verworfen werden. Die Positionsparameter können beispielsweise eine Distanz, ein Azimutalwinkel und ein Elevationswinkel sein. Zum Beispiel können mit der Hypothese für die Richtung der Landmarke der Azimutalwinkel und mit der Hypothese für die Entfernung der Landmarke die Distanz überprüft werden.

Auf diese Weise kann das Landesystem die Positionsdaten des Luftfahrzeuges automatisch und auf redundante Weise bestimmen. Somit wird eine Positionsbe-stimmung für ein Landesystem mit hoher Integrität bereitgestellt, so dass insgesamt das Landesystem verbessert wird. Die Erfindung stellt ferner ein Landesystem bereit, welches aufgrund von redundanter Systemauslegung auch im Erstfehlerfall noch eine sichere automatische Landung ermöglicht.

Mit anderen Worten betrifft ein erster Aspekt der Erfindung ein redundantes automatisches Fluglandesystem, aufweisend:
- einen Positions- oder Entfernungsmesser S
   (beispielsweise satellitenbasiert: GPS/SBAS);
- einen Positions- oder Entfernungsmesser B
   (beispielsweise bodenbasiert: Radartracker / Lasertracker, ILS oder MLS);
- eine Steuer- und Entscheidungseinheit E, verbunden mit einem automatischen Flugsteuerungssystem des Flugzeugs F;
- einen unabhängigen Sensor O zur Messung von Richtung oder Entfernung
   (beispielsweise elektrooptische Kamera);
wobei der Positionsmesser S, der Entfernungsmesser B und der Sensor O mit der Entscheidungseinheit E funktional verbunden sind, so dass
a) aus den Messungen von S und B unabhängig voneinander die Entfernung und Richtung des Flugzeugs vom Landepunkt und die Höhe des Flugzeugs (z.B. ausgedrückt durch Distanz, Azimut und Elevationswinkel) berechnet werden kann;
b) die Einheit E die beiden Messungen vergleicht; und
c) die Landung mit einem aus den beiden Messwerten geeignet erzeugten Positionssignal fortsetzt, wenn sich die beiden Messwerte um weniger als einen vordefinierten Betrag unterscheiden; oder
d) eine automatische Entscheidung zwischen den Messgebern herbeiführt, wenn sich die Messwerte um mehr als einen vordefinierten Betrag unterscheiden, dadurch, dass die Einheit E für die Werte der beiden Entfernungsparametersätze aus (a) Hypothesen für Eigenschaften eines charakteristischen Ortes in Relation zum Landepunkt erzeugt, die durch die Ergebnisse einer dritten unabhängigen Messung, durchgeführt mit dem Sensor O, bestätigt oder verworfen werden können.

Die Erfindung kann mit anderen Worten ein redundant ausgelegtes automatisches Landesystem mit zwei unabhängigen Positions- bzw. Entfernungsmessgebern betreffen. Das System kann die beiden Positionsmessungen vergleichen. Stimmen die Messungen überein, kann die Landung fortgesetzt werden. Unterscheiden sich die Positionsmessungen um mehr als einen festgelegten Wert, kann das Landesystem automatisch einen Messfehler feststellen und versuchen, eine automatische Entscheidung zwischen den ersten und zweiten Positionsdaten zu treffen.

Die Entscheidung kann im Kontext der Erfindung dadurch herbeigeführt werden, dass aus den Messergebnissen der beiden Sensoren unabhängig voneinander je eine Hypothese für die Richtigkeit der Messung formuliert wird, die durch eine dritte Messung mit einem unabhängigen Sensor bestätigt oder verworfen wird.

Gemäß einem Ausführungsbeispiel der Erfindung ist die Steuereinrichtung zum Überprüfen der ersten und zweiten Hypothese dazu ausgeführt, eine erste Korrelation für die erste Hypothese und die Sensordaten sowie eine zweite Korrelation für die zweite Hypothese und die Sensordaten zu bestimmen. Ferner ist die Steuereinrichtung dazu ausgeführt, diejenige Hypothese zu bestätigen, die eine bessere Korrelation mit den Sensordaten aufweist.

Beispielsweise können für die Hypothese für die Richtung der Landmarke ein lateraler Korrelationsindex und/oder für die Hypothese für die Entfernung der Landmarke ein Entfernungskorrelationsindex bestimmt werden. Die Steuereinheit kann dazu ausgeführt sein, diejenige Hypothese zu bestätigen, für welche ein größerer Korrelationsindex bestimmt wurde.

Auf diese Weise wird ein mathematisch präzises Verfahren zum Bestätigen oder Verwerfen der Hypothesen bereitgestellt.

Ein zweiter Aspekt der Erfindung betrifft ein redundantes automatisches Fluglandessystem gemäß dem ersten Aspekt, wobei
a) es sich bei dem Sensor O um einen abbildenden elektromagnetischen Sensor handelt (z.B. elektrooptische Kamera für sichtbares Licht oder Ultraviolettkamera oder Infrarotkamera oder Radarempfänger);
b) die Einheit E zu den beiden Entfernungsparametersätzen, gemäß dem ersten Aspekt a), je eine Hypothese für die erwartete Richtung eines charakteristischen Ortes in Relation zum Landepunkt erzeugt;
c) der Sensor O Bilder in die jeweils errechnete Richtung zu jeder Hypothese aufnimmt und die Einheit E mit einer automatischen Bildauswertung dasjenige Bild auswählt, welches eine bessere Korrelation des charakteristischen Ortes aufweist (z.B. höherer lateraler Korrelationsindex);
d) die Einheit E mit Hilfe der Lateralkorrelation gemäß dem zweiten Aspekt c) das geeignetere Signal für die Landung auswählt.

Aus den Messungen der beiden Positionsmessgeber kann mit anderen Worten je eine (Richtungs-) Hypothese für den Ort eines charakteristischen Bildmerkmals in Relation zum theoretischen Landepunkt errechnet werden. Dann können in die jeweiligen Richtungen jener Orte Bilder mit einem elektromagnetischen Empfänger (sichtbares, infrarotes, ultraviolettes Licht oder Radarstrahlung) aufgezeichnet werden.

Bildverarbeitungsalgorithmen können auf die Bilder angewandt werden, die jeweils einen Korrelationsindex für die Hypothese des charakteristischen Bildmerkmals an der angegebenen Position berechnen (Beispiel: Handelt es sich bei dem charakteristischen Bildmerkmal um die Landebahnmitte, wird die Hypothese Landebahnmitte an diesem Ort geprüft).

Können die Parameter eines der beiden Positionsmessgeber durch einen hohen lateralen Korrelationsindex bestätigt werden, kann die automatische Landung mit dem zugehörigen Messgeber erfolgen. Ergibt sich keine Übereinstimmung, kann die Landung abgebrochen werden.

Ein dritter Aspekt der Erfindung betrifft ein redundantes automatisches Fluglandessystem gemäß dem ersten Aspekt, wobei
a) es sich bei dem Sensor O um einen Entfernungsmesser handelt;
b) die Einheit E zu den beiden Entfernungsparametersätzen gemäß dem ersten Aspekt a) je eine Hypothese für die erwartete Entfernung eines charakteristischen Ortes in Relation zum Landepunkt erzeugt;
c) der Entfernungsmesser O die Entfernung des charakteristischen Ortes bestimmt und die Einheit E denjenigen Parametersatz aus dem ersten Aspekt a) bestimmt, welcher bezüglich der Hypothese für die Entfernung des charakteristischen Ortes besser mit dem Messwert des Entfernungsmessers O übereinstimmt (z.B. größere Entfernungskorrelation);
d) die Einheit E mit Hilfe der Entfernungskorrelation gemäß dem dritten Aspekt c) das geeignetere Signal für die Landung auswählt.

Aus den Messungen der beiden Positionsmessgeber kann jeweils eine Hypothese für die Entfernung eines charakteristischen Ortes in Relation zum theoretischen Landepunkt errechnet werden. Während der Landung können die Entfernung zu diesem Ort gemessen und ein Korrelationsindex für die jeweilige (Entfernungs-) Hypothese berechnet werden.

Gemäß einer weiteren beispielhaften Ausführungsform der Erfindung können aus den Sensordaten die Richtung, in der sich die Landmarke befindet, und die Entfernung der Landmarke zum Luftfahrzeug bestimmt werden. Die erste und zweite Hypothese sind dabei jeweils eine Hypothese für die Richtung und die Entfernung der Landmarke.

Auf diese Weise können zwei Positionsparameter der ersten und zweiten Positionsdaten überprüft werden, beispielsweise der Azimutalwinkel und die Distanz. Dadurch kann die Zuverlässigkeit der automatischen und redundanten Positionsbestimmung verbessert werden.

Gemäß einer weiteren beispielhaften Ausführungsform der Erfindung weist die Sensoreinrichtung eine Signalerfassungseinrichtung zum Erfassen von elektromagnetischen Signalen einer Signalquelle auf.

Beispielsweise kann die Sensoreinrichtung einen Radarempfänger aufweisen, der dazu ausgeführt ist, eine Richtung und/oder Entfernung einer Landmarke zu bestimmen, mit welcher die Hypothesen bestätigt bzw. verworfen werden können. Die Sensoreinrichtung kann auch eine Ultraviolettkamera und/oder eine Infrarotkamera aufweisen, mit welcher eine Richtung einer Landmarke mit einer UV- bzw. IR-Quelle bestimmt werden kann, wodurch die Hypothesen bestätigt oder verworfen werden können.

Ein vierter Aspekt der Erfindung betrifft ein redundantes automatisches Fluglandessystem gemäß dem ersten Aspekt, wobei
a) es sich bei dem Sensor O um einen elektromagnetischen Empfänger handelt (elektrooptische Kamera für sichtbares Licht oder Ultraviolettkamera oder Infrarotkamera oder Radarempfänger);
b) die Einheit E zu den beiden Entfernungsparametersätzen gemäß dem ersten Aspekt (a) je eine Hypothese für die erwartete Richtung einer vordefinierten Signalquelle in Relation zum Landepunkt erzeugt;
c) der Empfänger O die Strahlung der Signalquelle aufzeichnet und die Richtung der Signalquelle ermittelt sowie die Einheit E denjenigen Parameter-satz aus dem ersten Aspekt a) bestimmt, welcher bezüglich der Hypothese für die Richtung der Signalquelle besser mit dem Messwert des Empfängers O übereinstimmt (z.B. größere Lateralkorrelation);
d) die Einheit E mit Hilfe der Lateralkorrelation gemäß dem vierten Aspekt c) das geeignetere Signal für die Landung auswählt.

Aus den Messungen der beiden Positionsmessgeber kann mit anderen Worten je eine (Richtungs-) Hypothese für den Ort einer bekannten elektromagnetischen Signalquelle in Relation zum theoretischen Landepunkt errechnet werden. Während der Landung kann die Strahlung der Signalquelle mit einem passenden elektromagnetischen Empfänger (sichtbares, infrarotes, ultraviolettes Licht oder Radarstrahlung) aufgezeichnet, die Richtung der Signalquelle ermittelt und ein Korrelationsindex für die jeweilige Hypothese der Signalquelle an dem erwarteten Ort berechnet werden.

Können die Parameter eines der beiden Positionsmessgeber durch einen hohen lateralen Korrelationsindex bestätigt werden, kann die automatische Landung mit dem zugehörigen Messgeber erfolgen. Ergibt sich keine Übereinstimmung kann die Landung abgebrochen werden.

Gemäß einer weiteren beispielhaften Ausführungsform der Erfindung weist das Landesystem ferner eine Höhenmesseinrichtung zum Bestimmen einer Flughöhe des Luftfahrzeuges auf, wobei die Steuereinrichtung dazu ausgeführt ist, eine dritte Hypothese für die Flughöhe des Luftfahrzeuges basierend auf den ersten Positionsdaten und eine vierte Hypothese für die Flughöhe des Luftfahrzeuges basierend auf den zweiten Positionsdaten zu erzeugen. Die Steuereinrichtung ist dazu ausgeführt, die dritte Hypothese und die vierte Hypothese jeweils mit der von der Höhenmesseinrichtung bestimmten Flughöhe zu bestätigen oder zu verwerfen. Außerdem ist die Steuereinrichtung dazu ausgeführt, zu entscheiden, dass nur diejenigen Positionsdaten zum Steuern des Luftfahrzeugs zu verwenden sind, auf denen eine bei der Überprüfung bestätigte Hypothese für die Flughöhe des Luftfahrzeuges basiert.

Die Höhenmesseinrichtung kann beispielsweise ein Radarhöhenmesser oder ein Laserhöhenmesser sein. Die Höhenmesseinrichtung kann dabei unabhängig von den anderen Einrichtungen die Flughöhe bestimmen. Mittels der Höhenmesseinrichtung kann beispielsweise der Elevationswinkel der Positionsdaten überprüft werden. Auf diese Weise können die Positionsdaten mittels einer weiteren unabhängigen Einrichtung überprüft werden.

Ein fünfter Aspekt der Erfindung betrifft ein redundantes automatisches Fluglandessystem gemäß dem ersten, zweiten, dritten oder vierten Aspekt, aufweisend
- einen unabhängigen Höhenmesser H
   (beispielsweise Radarhöhenmesser / Laserhöhenmesser), wobei

a) die Einheit E denjenigen Parametersatz gemäß dem ersten Aspekt a) bestimmt, der bezüglich Höhe besser mit dem Messwert des Höhenmessers H übereinstimmt (z.B. größere Höhenkorrelation)
b) die Einheit E zusätzlich mit Hilfe der Höhenkorrelation gemäß dem fünften Aspekt a) das geeignetere Signal für die Landung auswählt.

Falls sich die Positionsparameter der beiden Messgeber beispielsweise bezüglich der Flughöhe unterscheiden, kann aus jeder Messung eine Hypothese für die Höhe des Flugzeugs über Boden als Funktion der Flugzeugposition errechnet und mit der Höheninformation eines zusätzlich installierten Höhenmessers (z.B. eines Radarhöhenmessers) abgeglichen (Höhenkorrelation) und das geeignetere Signal ausgewählt werden.

Gemäß einer weiteren beispielhaften Ausführungsform der Erfindung ist die Steuereinrichtung dazu ausgeführt, die ersten Positionsdaten und die zweiten Positionsdaten zu vergleichen. Ferner ist die Steuereinrichtung dazu ausgeführt ist, nur dann zu entscheiden, welche Sensordaten zum Steuern des Luftfahrzeugs nicht zu verwenden sind, wenn die ersten Positionsdaten und die zweiten Positionsdaten um mehr als einen vordefinierten Betrag voneinander abweichen.

Mit anderen Worten kann die Steuereinrichtung dazu ausgeführt sein, nur dann Positionsdaten zu bestätigen bzw. zu verwerfen, wenn die Differenz der Positionsdaten einen vordefinierten Schwellwert überschreitet. Falls dieser Schwellwert bzw. vordefinierte Betrag nicht überschritten wird, kann zum Beispiel ein Mittelwert der beiden Positionsdaten oder ein bestimmter Satz der beiden Positionsdaten zum Steuern des Luftfahrzeuges verwendet werden.

Gemäß einer weiteren beispielhaften Ausführungsform der Erfindung ist die Steuereinrichtung dazu ausgeführt, einen Landeanflug des Luftfahrzeuges abzubrechen, wenn bei Unterschreiten einer vordefinierten Höhe durch das Luftfahrzeug die ersten und zweiten Positionsdaten um mehr als einen vordefinierten Betrag voneinander abweichen und keine Entscheidung über die zu verwendenden Positionsdaten getroffen wurde.

Mit anderen Worten kann die vordefinierte Höhe ein sogenanntes Entscheidungsfenster definieren. Die Steuereinrichtung kann dazu ausgeführt sein, dass der Landeanflug abgebrochen wird, wenn bei Passieren des Entscheidungsfenster noch keine Entscheidung über die zu verwendenden Positionsdaten getroffen wurde und die Positionsdaten um mehr als den vordefinierten Betrag voneinander abweichen.

Ein sechster Aspekt der Erfindung betrifft ein automatisches Fluglandessystem gemäß dem ersten, zweiten, dritten, vierten oder fünften Aspekt, wobei ein Entscheidungsfenster für Landeabbruch geometrisch definiert wird, als der Ort, an dem das System automatisch die Landung abbricht, falls
a) sich das Flugzeug außerhalb des Fensters befindet; oder
b) keine ausreichende Übereinstimmung zwischen den Messungen der Positionssensoren besteht; und
zusätzlich zu keinem der beiden Positionsparametersätze
i. eine ausreichende Lateralkorrelation mit Hilfe des
   Bildsensors/Empfängers O
   (im Fall eines Systems gemäß dem zweiten oder vierten Aspekt); oder
ii. eine ausreichende Enfernungskorrelation mit Hilfe des Entfernungsmessers O
   (im Fall eines Systems gemäß dem dritten Aspekt); oder
iii. eine ausreichende Höhenkorrelation mit Hilfe des Höhensensors Herrechnet werden kann (im Fall eines Systems gemäß dem fünften Aspekt).

Mit anderen Worten kann ein Entscheidungsfenster definiert werden, das den Ort festlegt, an dem das Landesystem über einen Landeabbruch entscheidet. Dabei kann die Dimension des Fensters so bestimmt werden, dass ein Flugzeug, welches das Fenster passiert, mit sehr hoher Wahrscheinlichkeit auf der Landebahn landet.

Gemäß einer weiteren beispielhaften Ausführungsform der Erfindung ist die erste Positions- oder Entfernungsmesseinrichtung eine Satelliten-basierte Messeinrichtung, vorzugsweise ein GPS-System, ein GBAS-System, oder ein SBAS-System. Die zweite Positions- oder Entfernungsmesseinrichtung ist ferner ein Radartracker oder ein Lasertracker. Die Sensoreinrichtung weist eine optische Kamera, eine Infrarotkamera, eine Ultraviolettkamera und/oder einen Radarempfänger zum Erzeugen von Bildern auf.

Ferner kann die zweite Positions- oder Entfernungsmesseinrichtung auch ein Instrumentenlandesystem (ILS) oder ein Mikrowellenlandesystem (MLS) sein. Basierend auf den von der Sensoreinrichtung erzeugten Bildern kann die Richtung bzw. Entfernung der Landmarke bestimmt werden.

Die Erfindung betrifft gemäß einer weiteren beispielhaften Ausführungsform eine Drohne mit einem im Kontext der Erfindung beschriebenen Fluglandesystem.

Die Erfindung betrifft gemäß einer weiteren beispielhaften Ausführungsform ein Verfahren zum Bestimmen von Positionsdaten eines Luftfahrzeuges für ein automatisches Landesystem des Luftfahrzeuges. Das Verfahren weist dabei die Schritte des Erfassens erster Positionsdaten des Luftfahrzeuges durch eine erste Positions- oder Entfernungsmesseinrichtung und des Erfassens zweiter Positionsdaten des Luftfahrzeuges durch eine zweite Positions- oder Entfernungsmesseinrichtung auf. Ferner erfolgt im Verfahren das Erfassen von Sensordaten, aus welchen eine Richtung, in der sich eine Landmarke befindet, und/oder eine Entfernung der Landmarke zum Luftfahrzeug bestimmt werden kann bzw. können, durch eine Sensoreinrichtung. Das Verfahren umfasst ferner das Erzeugen einer ersten Hypothese für die Richtung bzw. Entfernung der Landmarke basierend auf den ersten Positionsdaten sowie das Erzeugen einer zweiten Hypothese für die Richtung bzw. Entfernung der Landmarke basierend auf den zweiten Positionsdaten. Gemäß des Verfahrens erfolgt das Bestätigen oder Verwerfen der ersten Hypothese und der zweiten Hypothese mittels der von der Sensoreinrichtung erfassten Sensordaten und das Entscheiden, dass nur diejenigen Positionsdaten zum Steuern des Luftfahrzeugs zu verwenden sind, auf denen eine bestätigte Hypothese basiert.

Das Verfahren kann beispielsweise durch ein im Kontext der Erfindung beschriebenes automatisches Landesystem durchgeführt werden. Ferner kann das Verfahren auch weitere Schritte umfassen, die im Kontext des Landesystems beschrieben sind.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

### Kurze Beschreibung der Figuren

Fig. 1 zeigt ein Luftfahrzeug mit einem automatischen Landesystem gemäß einem Ausführungsbeispiel der Erfindung sowie eine Landebahn in einer perspektivischen Ansicht.
Fig. 2 zeigt ein Luftfahrzeug mit einem automatischen Landesystem gemäß einem Ausführungsbeispiel der Erfindung sowie eine Landebahn in einer perspektivischen Ansicht.
Fig. 3 zeigt eine Position eines Luftfahrzeuges gemäß einem Ausführungsbeispiel der Erfindung sowie eine Landebahn in einer Seitenansicht.
Fig. 4 zeigt eine Position eines Luftfahrzeuges gemäß einem Ausführungsbeispiel der Erfindung sowie eine Landebahn in einer Draufsicht.
Fig. 5 zeigt ein Luftfahrzeug mit einem automatischen Landesystem gemäß einem Ausführungsbeispiel der Erfindung sowie eine Landebahn in einer perspektivischen Ansicht.
Fig. 6 zeigt ein Flussdiagramm für ein Verfahren gemäß einem Ausführungsbeispiel der Erfindung.

Die Figuren sind dabei schematisch und nicht maßstabsgetreu dargestellt. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

### Detaillierte Beschreibung von Ausführungsbeispielen

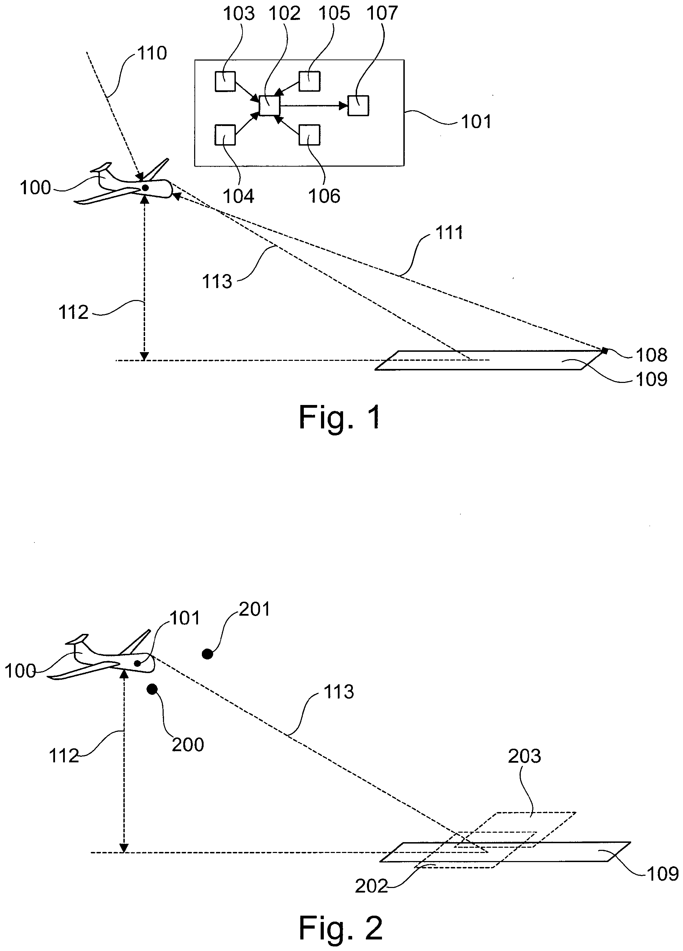

In Fig. 1 ist ein Luftfahrzeug 100 mit einem automatischen Landesystem 101 gemäß einem Ausführungsbeispiel der Erfindung dargestellt. Das Luftfahrzeug 100 ist beispielsweise ein unbemanntes Luftfahrzeug bzw. eine Drohne. Ferner ist eine Landebahn 109 dargestellt, auf welche das Luftfahrzeug 100 einen automatischen Landeanflug durchführt, wobei die Linie 113 die ideale Anfluglinie darstellt.

Das automatische Landesystem des Luftfahrzeuges umfasst eine Steuereinrichtung 102, eine erste Positions- oder Entfernungsmesseinrichtung 103, eine zweite Positions- oder Entfernungsmesseinrichtung 104, eine Sensoreinrichtung 105, eine Höhenmesseinrichtung 106 und eine Flugsteuereinrichtung 107. Dabei kann das Landesystem gemäß der Erfindung auch nur die Steuereinrichtung 102, die erste Positions- oder Entfernungsmesseinrichtung 103, die zweite Positions- oder Entfernungsmesseinrichtung 104 und die Sensoreinrichtung 105 umfassen.

Die Steuereinrichtung 102 ist dazu ausgeführt, die Position des Luftfahrzeuges 100 automatisch und redundant und somit mit hoher Integrität zu bestimmen. Beispielsweise ist die erste Positions- oder Entfernungsmesseinrichtung als GPS oder SBAS-System ausgeführt, welche die ersten Positionsdaten in Form einer absoluten dreidimensionalen Position 110 des Luftfahrzeuges bestimmen kann. Die zweite Positions- oder Entfernungsmesseinrichtung 104 ist beispielsweise als Radartracker bzw. Lasertracker ausgeführt und kann zweite Positionsdaten in Form von Distanz, Azimutalwinkel und Elevationswinkel 111 bezüglich einer Basisstation 108 bestimmen.

Falls diese ersten und zweiten Positionsdaten um mehr als einen vordefinierten Betrag voneinander abweichen, kann die Steuereinrichtung 102 Positionsdaten dieser ersten und zweiten Positionsdaten 110 und 111 für die weitere Verwendung zur Steuerung des Luftfahrzeuges 100 auswählen. Dazu ist die Steuereinrichtung ausgeführt, eine erste Hypothese für eine Richtung bzw. Entfernung einer Landmarke und eine zweite Hypothese für eine Richtung bzw. Entfernung der Landmarke zu erzeugen. Beispielsweise kann die Landebahn 109 die Landmarke sein. Es sind jedoch auch andere Landmarken möglich, z.B. ein Flugkontrollturm. Diese erste und zweite Hypothese kann die Steuereinrichtung mit den von der Sensoreinrichtung 105 erfassten Sensordaten jeweils bestätigen oder verwerfen. Ferner kann die Steuereinrichtung 102 auch dazu ausgeführt sein, jeweils eine Hypothese für die Richtung und die Entfernung der Landmarke zu erzeugen und diese zu bestätigen bzw. zu verwerfen.

Beispielsweise kann die Steuereinrichtung 102 eine erste Korrelation für die erste Hypothese und die Sensordaten und eine zweite Korrelation für die zweite Hypothese und die Sensordaten bestimmen, wobei die Hypothese mit der besseren Korrelation bestätigt wird. Beispielsweise können mit einer Hypothese für die Richtung der Landmarke 109 der Positionsparameter, der den Azimutalwinkel des Luftfahrzeuges 100 betrifft, überprüft werden und mit einer Hypothese für die Entfernung der Landmarke kann der Positionsparameter, der die Distanz des Luftfahrzeuges 100 betrifft, überprüft werden.

Die Höhenmesseinrichtung 106 des Landesystems ist dazu ausgeführt, eine Flughöhe 112 des Luftfahrzeuges zu bestimmen. Die Steuereinrichtung 102 kann basierend auf den ersten und zweiten Positionsdaten 110 und 111 dritte und vierte Hypothesen für die Flughöhe erzeugen, die mittels der von der Höhenmesseinrichtung 106 bestimmten Flughöhe bestätigt oder verworfen werden können, um eine zweite unabhängige Überprüfung der Positionsdaten bereitzustellen. Mittels der Höhenmesseinrichtung 106 kann zum Beispiel der Positionsparameter, der den Elevationswinkel des Luftfahrzeuges betrifft, überprüft werden. Es können daher ein, zwei oder drei Positionsparameter der Positionsdaten überprüft werden.

Die bestätigten Positionsdaten aus den ersten und zweiten Positionsdaten werden anschließend von der Steuereinrichtung 102 an die Flugsteuereinrichtung 107 weitergegeben. Die Flugsteuereinrichtung 107 kann dabei wie dargestellt ein Teil des Landesystems 101 sein. Alternativ kann die Flugsteuereinrichtung 107 auch Teil eines anderen Systems sein, was hier aber nicht explizit dargestellt ist.

In Fig. 2 ist ein Luftfahrzeug 100 mit einem automatischen Landesystem 101 gemäß einem weiteren Ausführungsbeispiel der Erfindung dargestellt. Das automatische Landesystem 1 ist beispielsweise in Fig. 1 im Detail beschrieben. Ferner sind eine Landebahn 109 und eine ideale Anfluglinie 113 dargestellt.

Die Steuereinrichtung des Landesystems ist dazu ausgeführt, mittels der ersten und zweiten Positions- oder Entfernungsmesseinrichtungen erste Positionsdaten 200 und zweite Positionsdaten 201 zu bestimmen. Wie in Fig. 2 dargestellt ist, weichen die ersten und zweiten Positionsdaten 200 und 201 deutlich voneinander ab. Um einen Satz an Positionsdaten aus den ersten und zweiten Positionsdaten für die weitere Verwendung für die Steuerung des Luftfahrzeuges 100 auszuwählen, ist die Steuereinrichtung des Landesystems 101 dazu ausgeführt, eine erste Hypothese und eine zweite Hypothese für eine Richtung einer Landmarke, z.B. der Landebahn 109, zu erzeugen. Um diese erste und zweite Hypothese zu überprüfen bzw. zu bestätigen oder zu verwerfen, ist die Steuereinrichtung dazu ausgeführt, mittels der Sensoreinrichtung, die in diesem Fall als abbildende Sensoreinrichtung, als optische Kamera, Ultraviolettkamera oder als Infrarotkamera, ausgeführt ist, ein erstes Bild 202 entlang der gemäß der ersten Hypothese definierten Richtung und ein zweiten Bild 203 entlang der gemäß der zweiten Hypothese definierten Richtung zu erzeugen. Mittels einer Bildauswertung kann die Steuereinrichtung überprüfen, ob sich die Landmarke bzw. Landebahn 109 in dem ersten Bild 202 oder dem zweiten Bild 203 befindet. In diesem Fall befindet sich die Landmarke bzw. Landebahn 109 in dem ersten Bild 202, so dass die erste Hypothese bestätigt wird und die ersten Positionsdaten 200 für die Steuerung des Luftfahrzeuges 100 verwendet werden bzw. an die Flugsteuerungseinheit übertragen werden.

Landebahnen können dadurch gekennzeichnet sein, dass sich der Rand der Landebahn zur Landebahnschulter klar abhebt oder dass dieser geeignet markiert ist. Bildverarbeitungsverfahren können beispielsweise Symmetrien in Bildern erkennen. Handelt es sich bei der Landmarke um die Landebahn, und ist bekannt, wie der Landepunkt relativ zur Landebahnmitte liegt (beispielsweise auf der Landebahnmitte), so kann eine erste Hypothese für die Position der Landebahnmitte im ersten Bild 202 und eine zweite Hypothese für die Position der Landebahnmitte im zweiten Bild 203 berechnet werden und beide Bilder auf symmetrische Merkmale, wie sie typischerweise am Landebahnrand auftreten, untersucht werden.

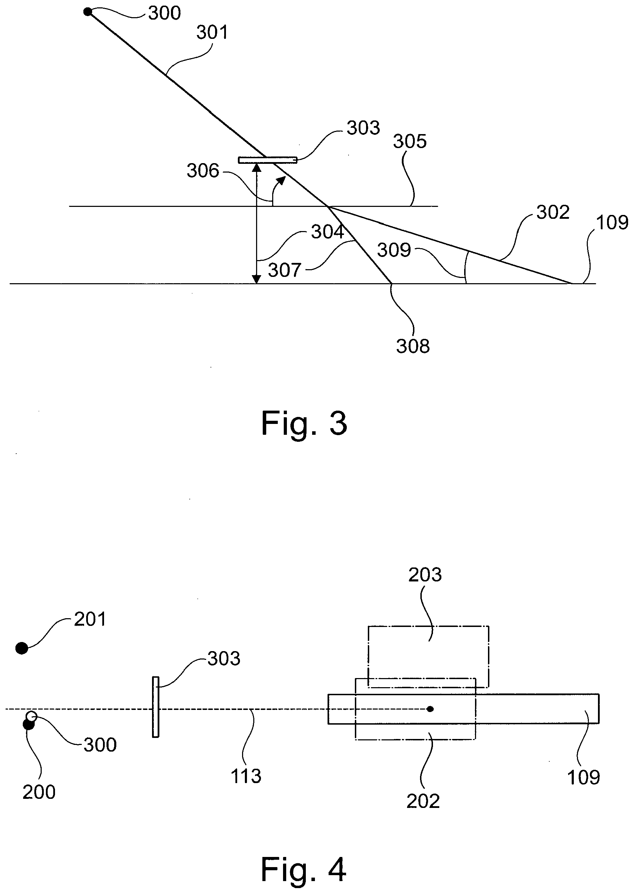

In Fig. 3 ist eine Seitenansicht einer Landesituation dargestellt. Der Punkt 300 markiert die Position eines Luftfahrzeuges mit einem automatischen Landesystem gemäß einem Ausführungsbeispiel der Erfindung. Ferner ist eine Landebahn 109 dargestellt. Die ideale Anfluglinie ist durch die Linien 301 und 302 dargestellt. Die gestrichelte Linie 305 markiert die sogenannte Flare-Höhe bzw. Landeschwelle, ab der die Anfluglinie bzw. der zweite Anflugabschnitt 302 einen flacheren Anflugwinkel 309 aufweist als der Anflugwinkel 306 des ersten Anflugabschnittes 301. Die Linie 307 markiert die Verlängerung des ersten Anflugabschnittes 301 und endet im sogenannte Ziel-Landepunkt 308.

Ferner sind eine durch das Landesystem des Luftfahrzeuges vordefinierte Höhe 304 sowie ein Entscheidungsfenster 303 dargestellt. Das Entscheidungsfenster 303 definiert ein Raumelement, dessen Ausdehnung derart definiert ist, dass das Luftfahrzeug, mit sehr hoher Wahrscheinlichkeit auf der Landebahn landet, wenn es das Entscheidungsfenster 304 passiert.

Die Steuereinrichtung des Landesystems ist dazu ausgeführt, den Landeanflug des Luftfahrzeuges abzubrechen, wenn bei Unterschreiten der vordefinierten Höhe 304 bzw. bei Passieren des Entscheidungsfensters 303 durch das Luftfahrzeug die ersten und zweiten Positionsdaten um mehr als einen vordefinierten Betrag voneinander abweichen und keine Entscheidung über die zu verwendenden Positionsdaten getroffen wurde. Ferner ist die Steuereinheit dazu ausgeführt, den Landeanflug abzubrechen, wenn das Luftfahrzeug die Höhe 304 unterschreitet und dabei das Entscheidungsfensters 303 nicht passiert.

In Fig. 4 ist eine Draufsicht einer Landesituation dargestellt, wobei die Position 300 eines Luftfahrzeuges mit einem Landesystem gemäß einem Ausführungsbeispiel der Erfindung dargestellt ist. Ferner ist eine Landebahn 109 dargestellt, wobei die Linie 113 den idealen Landeanflug markiert.

Wie bereits im Kontext von Fig. 2 beschrieben, sind erste und zweite Positionsdaten 200 und 201 dargestellt, die von den ersten und zweiten Positions- oder Entfernungsmesseinrichtungen bestimmt sind. Die Steuereinrichtung ist dazu ausgeführt, basierend auf den Positionsdaten 200 und 201 jeweils eine erste bzw. zweite Hypothese für eine Richtung bzw. Entfernung einer Landmarke, z.B. der Landebahn 109, zu erzeugen, die mittels der ersten und zweiten Bilder 202 und 203 bestätigt bzw. verworfen werden, wie es im Kontext von Fig. 2 im Detail beschrieben ist.

Ferner ist das im Zusammenhang mit Fig. 3 beschriebene Entscheidungsfenster 303 gezeigt.

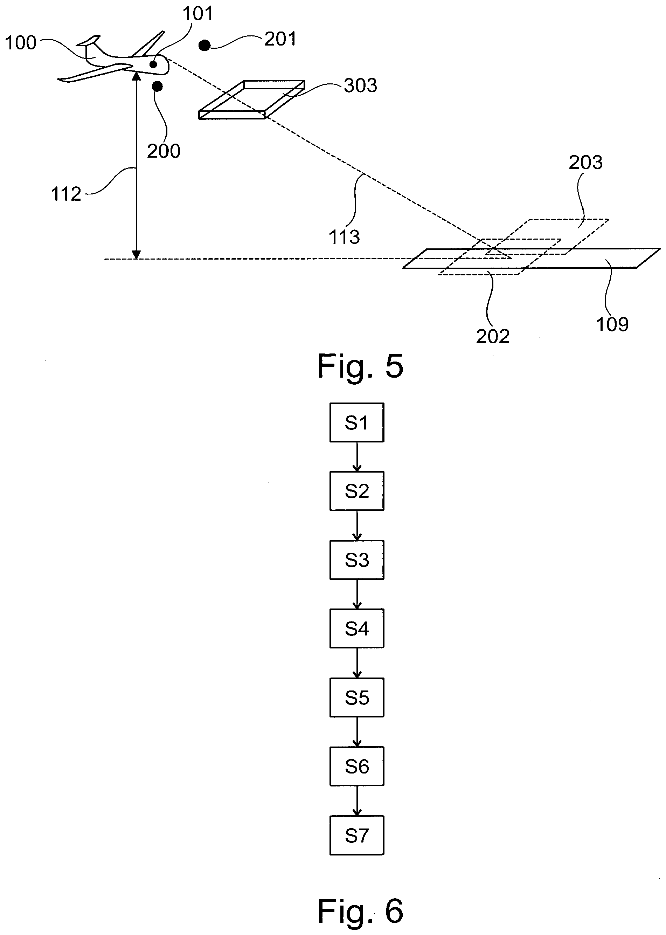

Fig. 5 zeigt eine perspektivische Ansicht eines Luftfahrzeuges 100 mit einem automatischen Landesystem 101 gemäß einem Ausführungsbeispiel der Erfindung. Es ist ferner eine Landebahn 109 dargestellt, wobei der ideale Anflug mittels der Linie 113 gezeigt ist.

Wie bereits im Kontext der Figuren 2 und 4 beschrieben sind die ersten und zweiten Positionsdaten 200 und 201 dargestellt, die mittels der von der Sensoreinrichtung erfassten ersten und zweiten Bilder 202 und 203 bestätigt bzw. verworfen werden. Ferner ist das im Kontext der Figuren 3 und 4 beschriebene Entscheidungsfenster 303 dargestellt.

In Fig. 6 ist ein Flussdiagramm für ein Verfahren zum Bestimmen von Positionsdaten eines Luftfahrzeuges für ein automatisches Landesystem des Luftfahrzeuges gemäß einem Ausführungsbeispiel der Erfindung dargestellt. Das Verfahren weist dabei den Schritt S1 des Erfassens erster Positionsdaten des Luftfahrzeuges durch eine erste Positions- oder Entfernungsmesseinrichtung und den Schritt S2 des Erfassens zweiter Positionsdaten des Luftfahrzeuges durch eine zweite Posi- tions- oder Entfernungsmesseinrichtung auf. Ferner erfolgt im Verfahren der Schritt S3 des Erfassens von Sensordaten, aus welchen eine Richtung, in der sich eine Landmarke befindet, und/oder eine Entfernung der Landmarke zum Luftfahrzeug bestimmt werden kann bzw. können, durch eine Sensoreinrichtung. Das Verfahren umfasst ferner den Schritt S4 des Erzeugens einer ersten Hypothese für die Richtung bzw. Entfernung der Landmarke basierend auf den ersten Positionsdaten sowie den Schritt S5 des Erzeugens einer zweiten Hypothese für die Richtung bzw. Entfernung der Landmarke basierend auf den zweiten Positionsdaten. Gemäß des Verfahrens erfolgt der Schritt S6 des Bestätigens oder Verwerfens der ersten Hypothese und der zweiten Hypothese mittels der von der Sensoreinrichtung erfassten Sensordaten und der Schritt S7 des Entscheidens, dass nur diejenigen Positionsdaten zum Steuern des Luftfahrzeugs zu verwenden sind, auf denen eine bestätigte Hypothese basiert.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Automatisches Landesystem (101) für ein Luftfahrzeug (100), aufweisend:
eine Steuereinrichtung (102) zum Bereitstellen von Positionsdaten zum Steuern des Luftfahrzeugs;
eine erste Positions- oder Entfernungsmesseinrichtung (103) zum Erfassen erster Positionsdaten (110) des Luftfahrzeuges;
eine zweite Positions- oder Entfernungsmesseinrichtung (104) zum Erfassen zweiter Positionsdaten (111) des Luftfahrzeuges;
eine Sensoreinrichtung (105) zum Erfassen von Sensordaten, aus welchen eine Richtung, in der sich eine Landmarke (109) befindet, und/oder eine Entfernung der Landmarke zum Luftfahrzeug bestimmt werden kann bzw. können; **dadurch gekennzeichnet,**
**dass** die Steuereinrichtung (102) dazu ausgeführt ist, basierend auf den ersten Positionsdaten (110) eine erste Hypothese für die Richtung bzw. Entfernung der Landmarke und basierend auf den zweiten Positionsdaten (111) eine zweite Hypothese für die Richtung bzw. Entfernung der Landmarke zu erzeugen;
**dass** die Steuereinrichtung (102) dazu ausgeführt ist, die erste Hypothese und die zweite Hypothese jeweils mit den von der Sensoreinrichtung (105) erfassten Sensordaten zu bestätigen oder zu verwerfen;
**dass** die Steuereinrichtung (102) dazu ausgeführt ist, zu entscheiden, dass nur diejenigen Positionsdaten zum Steuern des Luftfahrzeugs (100) zu verwenden sind, auf denen eine bestätigte Hypothese basiert; und
**dass** die Steuereinrichtung dazu ausgeführt ist, die bestätigten Positionsdaten aus den ersten und zweiten Positionsdaten an eine Flugsteuereinrichtung (107) weiter zu geben.

2. Landesystem (101) nach Anspruch 1,
wobei die Steuereinrichtung (102) zum Überprüfen der ersten und zweiten Hypothese dazu ausgeführt ist, eine erste Korrelation für die erste Hypothese und die Sensordaten sowie eine zweite Korrelation für die zweite Hypothese und die Sensordaten zu bestimmen; und
wobei die Steuereinrichtung (102) dazu ausgeführt ist, diejenige Hypothese zu bestätigen, die eine bessere Korrelation mit den Sensordaten aufweist.

3. Landesystem (101) nach einem der vorangehenden Ansprüche, wobei aus den Sensordaten die Richtung, in der sich die Landmarke (109) befindet, und die Entfernung der Landmarke zum Luftfahrzeug (100) bestimmt werden können; und
wobei die erste und zweite Hypothese jeweils eine Hypothese für die Richtung und die Entfernung der Landmarke sind.

4. Landesystem (101) nach einem der vorangehenden Ansprüche, wobei die Sensoreinrichtung (105) eine Signalerfassungseinrichtung zum Erfassen von elektromagnetischen Signalen einer Signalquelle aufweist.

5. Landesystem (101) nach einem der vorangehenden Ansprüche, ferner aufweisend:
eine Höhenmesseinrichtung (106) zum Bestimmen einer Flughöhe (112) des Luftfahrzeuges (100);
wobei die Steuereinrichtung (102) dazu ausgeführt ist, eine dritte Hypothese für die Flughöhe des Luftfahrzeuges basierend auf den ersten Positionsdaten (110) und eine vierte Hypothese für die Flughöhe des Luftfahrzeuges basierend auf den zweiten Positionsdaten (111) zu erzeugen;
wobei die Steuereinrichtung (102) dazu ausgeführt ist, die dritte Hypothese und die vierte Hypothese jeweils mit der von der Höhenmesseinrichtung bestimmten Flughöhe (112) zu bestätigen oder zu verwerfen; und
wobei die Steuereinrichtung (102) dazu ausgeführt ist, zu entscheiden, dass nur diejenigen Positionsdaten zum Steuern des Luftfahrzeugs zu verwenden sind, auf denen eine bei der Überprüfung bestätigte Hypothese für die Flughöhe des Luftfahrzeuges basiert.

6. Landesystem (101) nach einem der vorangehenden Ansprüche,
wobei die Steuereinrichtung (102) dazu ausgeführt ist, die ersten Positionsdaten (110) und die zweiten Positionsdaten (111) zu vergleichen; und
wobei die Steuereinrichtung (102) dazu ausgeführt ist, nur dann zu entscheiden, welche Sensordaten zum Steuern des Luftfahrzeugs nicht zu verwenden sind, wenn die ersten Positionsdaten und die zweiten Positionsdaten um mehr als einen vordefinierten Betrag voneinander abweichen.

7. Landesystem (101) nach einem der vorangehenden Ansprüche,
wobei die Steuereinrichtung (102) dazu ausgeführt ist, einen Landeanflug (113) des Luftfahrzeuges abzubrechen, wenn bei Unterschreiten einer vordefinierten Höhe (303) durch das Luftfahrzeug die ersten und zweiten Positionsdaten um mehr als einen vordefinierten Betrag voneinander abweichen und keine Entscheidung über die zu verwendenden Positionsdaten getroffen wurde.

8. Landesystem (101) nach einem der vorangehenden Ansprüche,
wobei die erste Positions- oder Entfernungsmesseinrichtung (103) eine satellitenbasierte Messeinrichtung, vorzugsweise ein GPS-System, ein SBAS-System oder ein GBAS-System, ist;
wobei die zweite Positions- oder Entfernungsmesseinrichtung (104) ein Radartracker oder ein Lasertracker ist; und
wobei die Sensoreinrichtung (105) eine optische Kamera, eine Infrarotkamera, eine Ultraviolettkamera und/oder einen Radarempfänger zum Erzeugen von Bildern aufweist.

9. Drohne (100) mit einem Fluglandesystem (101) nach einem der vorangehenden Ansprüche.

10. Verfahren zum Bestimmen von Positionsdaten eines Luftfahrzeuges (100) für ein automatisches Landesystem (101) des Luftfahrzeuges, das Verfahren aufweisend die Schritte:
Erfassen erster Positionsdaten des Luftfahrzeuges durch eine erste Positions- oder Entfernungsmesseinrichtung (S1);
Erfassen zweiter Positionsdaten des Luftfahrzeuges durch eine zweite Positions- oder Entfernungsmesseinrichtung (S2);
Erfassen von Sensordaten, aus welchen eine Richtung, in der sich eine Landmarke befindet, und/oder eine Entfernung der Landmarke zum Luftfahrzeug bestimmt werden kann bzw. können, durch eine Sensoreinrichtung (S3);
Erzeugen einer ersten Hypothese für die Richtung bzw. Entfernung der Landmarke basierend auf den ersten Positionsdaten (S4);
Erzeugen einer zweiten Hypothese für die Richtung bzw. Entfernung der Landmarke basierend auf den zweiten Positionsdaten (S5);
Bestätigen oder Verwerfen der ersten Hypothese und der zweiten Hypothese mittels der von der Sensoreinrichtung erfassten Sensordaten (S6);
Entscheiden, dass nur diejenigen Positionsdaten zum Steuern des Luftfahrzeugs zu verwenden sind, auf denen eine bestätigte Hypothese basiert (S7); und
Weitergeben der bestätigten Positionsdaten aus den ersten und zweiten Positionsdaten an eine Flugsteuereinrichtung.

## Claims

1. Automatic landing system (101) for an aircraft (100), having:
a control device (102) for providing position data for controlling the aircraft;
a first position or distance measuring device (103) for acquiring first position data (110) relating to the aircraft;
a second position or distance measuring device (104) for acquiring second position data (111) relating to the aircraft;
a sensor device (105) for acquiring sensor data from which a direction in which a landmark (109) is situated and/or a distance between the landmark and the aircraft can be determined; **characterized**
**in that** the control device (102) is designed to generate a first hypothesis for the direction and/or distance of the landmark on the basis of the first position data (110) and to generate a second hypothesis for the direction and/or distance of the landmark on the basis of the second position data (111);
**in that** the control device (102) is designed to respectively confirm or reject the first hypothesis and the second hypothesis with the sensor data acquired by the sensor device (105);
**in that** the control device (102) is designed to decide that only those position data on which a confirmed hypothesis is based should be used to control the aircraft (100); and
**in that** the control device is designed to forward the confirmed position data from the first and second position data to a flight control device (107).

2. Landing system (101) according to Claim 1,
the control device (102) for checking the first and second hypotheses being designed to determine a first correlation for the first hypothesis and the sensor data and to determine a second correlation for the second hypothesis and the sensor data; and
the control device (102) being designed to confirm that hypothesis which has a better correlation to the sensor data.

3. Landing system (101) according to one of the preceding claims, the direction in which the landmark (109) is situated and the distance between the landmark and the aircraft (100) being able to be determined from the sensor data; and
the first and second hypotheses each being a hypothesis for the direction and the distance of the landmark.

4. Landing system (101) according to one of the preceding claims, the sensor device (105) having a signal acquisition device for acquiring electromagnetic signals from a signal source.

5. Landing system (101) according to one of the preceding claims, also having:
an altitude measuring device (106) for determining a flying altitude (112) of the aircraft (100);
the control device (102) being designed to generate a third hypothesis for the flying altitude of the aircraft on the basis of the first position data (110) and to generate a fourth hypothesis for the flying altitude of the aircraft on the basis of the second position data (111);
the control device (102) being designed to respectively confirm or reject the third hypothesis and the fourth hypothesis with the flying altitude (112) determined by the altitude measuring device; and
the control device (102) being designed to decide that only those position data on which a hypothesis confirmed during the check for the flying altitude of the aircraft is based should be used to control the aircraft.

6. Landing system (101) according to one of the preceding claims,
the control device (102) being designed to compare the first position data (110) and the second position data (111); and
the control device (102) being designed to decide which sensor data should not be used to control the aircraft only when the first position data and the second position data differ from one another by more than a predefined amount.

7. Landing system (101) according to one of the preceding claims,
the control device (102) being designed to abort a landing approach (113) of the aircraft if the first and second position data differ from one another by more than a predefined amount and no decision has been made with respect to the position data to be used when a predefined altitude (303) is undershot by the aircraft.

8. Landing system (101) according to one of the preceding claims,
the first position or distance measuring device (103) being a satellite-based measuring device, preferably a GPS system, an SBAS system or a GBAS system;
the second position or distance measuring device (104) being a radar tracker or a laser tracker; and
the sensor device (105) having an optical camera, an infrared camera, an ultraviolet camera and/or a radar receiver for generating images.

9. Drone (100) having a flight landing system (101) according to one of the preceding claims.

10. Method for determining position data relating to an aircraft (100) for an automatic landing system (101) of the aircraft, the method having the steps of:
acquiring first position data relating to the aircraft by means of a first position or distance measuring device (S1);
acquiring second position data relating to the aircraft by means of a second position or distance measuring device (S2);
acquiring sensor data from which a direction in which a landmark is situated and/or a distance between the landmark and the aircraft can be determined by means of a sensor device (S3);
generating a first hypothesis for the direction and/or distance of the landmark on the basis of the first position data (S4);
generating a second hypothesis for the direction and/or distance of the landmark on the basis of the second position data (S5);
confirming or rejecting the first hypothesis and the second hypothesis by means of the sensor data acquired by the sensor device (S6);
deciding that only those position data on which a confirmed hypothesis is based should be used to control the aircraft (S7); and
forwarding the confirmed position data from the first and second position data to a flight control device.

## Revendications

1. Système d'atterrissage automatique (101) destiné à un aéronef (100), comportant :
un dispositif de commande (102) destiné à fournir des données de position pour commander l'aéronef ;
un premier dispositif de mesure de position ou de distance (103) destiné à détecter des premières données de position (110) de l'aéronef ;
un deuxième dispositif de mesure de position ou de distance (104) destiné à détecter des deuxièmes données de position (111) de l'aéronef ;
un dispositif capteur (105) destiné à détecter des données de capteur à partir desquelles une direction dans laquelle se trouve un repère au sol (109) et/ou une distance du repère au sol à l'aéronef peut ou peuvent être déterminée(s) ;
**caractérisé en ce que** le dispositif de commande (102) est conçu pour générer, sur la base des premières données de position (110), une première hypothèse concernant la direction ou la distance du repère au sol et, sur la base des deuxièmes données de position (111), une deuxième hypothèse concernant la direction ou la distance du repère au sol ;
**en ce que** le dispositif de commande (102) est conçu pour confirmer ou infirmer la première hypothèse et la deuxième hypothèse à partir des données de capteur respectives détectées par le dispositif capteur (105) ;
**en ce que** le dispositif de commande (102) est conçu pour décider que seules les données de position sur lesquelles est basée une hypothèse confirmée doivent être utilisées pour commander l'aéronef (100) ; et
**en ce que** le dispositif de commande est conçu pour transmettre les données de position confirmées à partir des première et deuxièmes données de position à un dispositif de commande de vol (107).

2. Système d'atterrissage (101) selon la revendication 1,
dans lequel le dispositif de commande (102), pour vérifier les premières et deuxième hypothèses, est conçu pour déterminer une première corrélation pour la première hypothèse et les données de capteur ainsi qu'une deuxième corrélation pour la deuxième hypothèse et les données de capteur ; et
dans lequel le dispositif de commande (102) est conçu pour confirmer l'hypothèse qui présente la meilleure corrélation avec les données de capteur.

3. Système d'atterrissage (101) selon l'une quelconque des revendications précédentes,
dans lequel la direction dans laquelle se trouve le repère au sol (109) et la distance du repère au sol à l'aéronef (100) peuvent être déterminées à partir des données de capteur ; et
dans lequel les première et deuxième hypothèses sont respectivement une hypothèse concernant la direction et la distance du repère au sol.

4. Système d'atterrissage (101) selon l'une quelconque des revendications précédentes,
dans lequel le dispositif capteur (105) comporte un dispositif de détection de signaux permettant de détecter des signaux électromagnétiques d'une source de signaux.

5. Système d'atterrissage (101) selon l'une quelconque des revendications précédentes,
comportant en outre :
un dispositif de mesure d'altitude (106) destiné à déterminer une altitude de vol (112) de l'aéronef (100) ;
dans lequel le dispositif de commande (102) est conçu pour générer une troisième hypothèse concernant l'altitude de vol de l'aéronef sur la base des premières données de position (110) et une quatrième hypothèse concernant l'altitude de vol de l'aéronef sur la base des deuxièmes données de position (111) ;
dans lequel le dispositif de commande (102) est conçu pour confirmer ou infirmer respectivement la troisième hypothèse et la quatrième hypothèse à partir de l'altitude de vol (112) déterminée par le dispositif de mesure d'altitude ; et
dans lequel le dispositif de commande (102) est conçu pour décider que seules les données de position sur lesquelles est basée l'hypothèse concernant l'altitude de vol de l'aéronef confirmée lors de la vérification doivent être utilisées pour commander l'aéronef.

6. Système d'atterrissage (101) selon l'une quelconque des revendications précédentes,
dans lequel le dispositif de commande (102) est conçu pour comparer les premières données de position (110) aux deuxièmes données de position (111) ; et
dans lequel le dispositif de commande (102) est conçu pour ne décider des données de capteur qui ne doivent pas être utilisées pour commander l'aéronef que lorsque les premières données de position et les deuxièmes données de position diffèrent de plus d'une quantité prédéfinie.

7. Système d'atterrissage (101) selon l'une quelconque des revendications précédentes,
dans lequel le dispositif de commande (102) est conçu pour interrompre un atterrissage (113) de l'aéronef lorsque les premières et deuxièmes données de position diffèrent de plus d'une quantité prédéfinie en dessous d'une altitude prédéfinie (303) et lorsqu'aucune décision n'a été prise en ce qui concerne les données de position utilisées.

8. Système d'atterrissage (101) selon l'une quelconque des revendications précédentes,
dans lequel le premier dispositif de mesure de position ou de distance (103) est un dispositif de mesure à base de satellite, de préférence un système GPS, un système SBAS ou un système GBAS ;
dans lequel le deuxième dispositif de mesure de position ou de distance (104) est un dispositif de poursuite à radar ou un dispositif de poursuite à laser ; et
dans lequel le dispositif capteur (105) comporte une caméra optique, une caméra infrarouge, une caméra ultraviolette et/ou un récepteur radar destiné à générer des images.

9. Drone (100) comportant un système d'atterrissage (101) selon l'une quelconque des revendications précédentes.

10. Dispositif destiné à déterminer des données de position d'un aéronef (100) pour un système d'atterrissage automatique (101) de l'aéronef, le procédé comprenant les étapes consistant à :
détecter des premières données de position de l'aéronef au moyen d'un premier dispositif de mesure de position ou de distance (S1) ;
détecter des deuxièmes données de position de l'aéronef au moyen d'un deuxième dispositif de mesure de position ou de distance (S2) ;
détecter des données de capteur à partir desquelles il est possible de déterminer une direction dans laquelle se trouve un repère au sol et/ou une distance du repère au sol à l'aéronef, au moyen d'un dispositif capteur (S3) ;
générer une première hypothèse concernant la direction ou la distance du repère au sol sur la base des premières données de position (S4) ;
générer une deuxième hypothèse concernant la direction ou la distance du repère au sol sur la base des deuxièmes données de position (S5) ;
confirmer ou infirmer la première hypothèse et la deuxième hypothèse à partir des données de capteur (S6) détectées par le dispositif capteur ;
décider que seules les données de position sur lesquelles est basée une hypothèse confirmée (S7) doivent être utilisées pour commander l'aéronef ; et
transmettre les données de position confirmées à partir des première et deuxièmes données de position à un dispositif de commande de vol.
